# EUROPÄISCHE PATENTSCHRIFT

(11) **EP 1 694 448 B1**
(45) Veröffentlichungstag und Bekanntmachung des Hinweises auf die Patenterteilung: **17.09.2008**
(21) Anmeldenummer: 04820586.8
(22) Anmeldetag: 11.11.2004
(51) Int. Cl.: B21B 31/07, F16J 15/34, F16J 15/447

(54) **DICHTUNGSVORRICHTUNG**
SEALING DEVICE
DISPOSITIF D'ETANCHEITE

(30) Priorität: 16.12.2003 DE 10360382
(43) Veröffentlichungstag der Anmeldung: 30.08.2006
(73) Patentinhaber: SMS Demag Aktiengesellschaft, 40237 Düsseldorf (DE)
(72) Erfinder: ROEINGH, Konrad, 57271 Hilchenbach (DE); KELLER, Karl, 57217 Hilchenbach (DE); HÜCKER, Rolf, 57223 Kreuztal (DE)
(74) Vertreter: Klüppel, Walter
(86) Internationale Anmeldenummer: PCT/EP2004/012782
(87) Internationale Veröffentlichungsnummer: WO 2005/061139

(56) Entgegenhaltungen:
- DE-U1- 29 620 018
- US-A- 4 679 801
- US-A- 4 910 987
- US-B1- 6 217 219

## Beschreibung

Die Erfindung betrifft eine Dichtungsvorrichtung für Walzenlager mit einer Zapfendichtung, der walzenballenseitig eine Ringdichtung vorgeordnet ist, die fest mit einem Ringansatz des Lagergehäuses verbunden ist und deren Dichtlippe auf der Stirnseite der Walze mit Dichtungskontakt auflegt.

Eine derartige Dichtungsvorrichtung ist z. B. durch die DE 694 10 752 T2 bekannt geworden. Die hier gezeigte Ringdichtung ist im harten Walzbetrieb ständig dem mit Verunreinigungen versetzten Kühlmittel ausgesetzt, wodurch die Dichtungslippe nur eine sehr kurze Lebensdauer aufweist. Hinzu kommt, dass auch die Gegenlauffläche, d. h. die Stirnseite der Walze durch die im Kühlmittel enthaltenen Verunreinigungen überproportional verschlissen wird, so dass auch diese Gegenlaufseite nur eine kurze Lebensdauer aufweist. Weiterhin weisen die Ringdichtungen in ihrem jeweils unteren Bereich Öffnungen auf, die dazu dienen, dass das zwischen Dichtlippe und Gegenlauffläche in den Bereich des dahinter angeordneten Labyrinths gelangte mit Verunreinigungen versetzte Kühlmittel wieder aus dem Labyrinth ablaufen kann. Zumindest im Bereich der oberen Walzen eines Walzgerüsts kann von benachbarten Walzen stammendes Spritzwasser direkt in diese Öffnung eindringen, so dass die räumlich dahinter liegende Zapfendichtung über Gebühr mit verschmutztem Kühlmittel beaufschlagt wird.

Die US-B1-6 217 219 offenbart eine Lagerdichtung mit gleichmäßiger Flüssigkeitsspülung. Der Einsatz einer derartigen Lagerdichtung in einem Walzwerk ist nicht nahegelegt. Der hier offenbarte Rotor weist Stirnseiten auf, welche aufwendig herzustellen und zu bearbeiten und für schnell verschleißende Walzen nicht geeignet sind.

Die DE 296 20 018 U1 offenbart ein Walzenlager für Walzgerüste. Hier ist einer Zapfendichtung eine Ringdichtung mit Ringansatz vorgeschaltet. Der dem Ringansatz vorgeschaltete Eingang eines Labyrinths liegt jedoch so, dass die von der Walze kommenden Verschmutzungen ungehindert zur Ringdichtung gelangen können. Eine Oberflächenbehandlung des Ringansatzes ist der D2 ebenfalls nicht zu entnehmen.

Der Erfindung liegt die Aufgabe zugrunde, eine Dichtungsvorrichtung aufzuzeigen, bei der die Dichtungslippe der Ringdichtung kaum noch vom mit Verunreinigungen versetzten Kühlmittel beaufschlagt wird, die eine größere Lebensdauer aufweist und bei der kein Spritzwasser in Abflussöffnungen eindringen kann. Der Erfindung liegt zudem die Aufgabe zugrunde, die Lebensdauer der der Ringdichtung zugeordneten Gegenlauffläche zu erhöhen.

Zur Lösung dieser Aufgabe wird vorgeschlagen, dass ein im Querschnitt L-förmiges Ringprofil mit seinem ersten Schenkel mit der Stirnseite der Walze fest verbunden ist, dass die Dichtungslippe auf Bereichen des ersten Schenkels aufliegt, dass der zweite Schenkel des L-förmigen Ringprofils die Ringdichtung und Bereiche des Ringansatzes mit geringem Abstand umschließt, und zur Walzenballenseite hin abdichtet und dass der Ringansatz außenseitig, und nach außen offen, eine Abflussnut aufweist.

Dadurch, dass die Dichtungslippe auf dem ersten Schenkel des L-förmigen Ringprofils aufliegt, wird ein Verschleiß der Stirnseite der Walze unterbunden. Der die Ringdichtung und Teile des Ringansatzes übergreifende zweite Schenkel gewährleistet, dass das mit Verunreinigungen versetzte Kühlmittel nicht direkt auf die Ringdichtung auftreffen kann. Durch den geringen Abstand des zweiten Schenkels zum Ringabsatz wird gewährleistet, dass eine Art Labyrinth gebildet wird, durch welches kaum mit Verunreinigungen versetztes Kühlmittel bis zur Ringdichtung gelangen kann. Damit vor dem Eingang des zwischen dem zweiten Schenkel und dem Ringansatz gebildeten Labyrinth kein Stau an mit Verunreinigungen versetztem Kühlmittel entstehen kann, ist hier eine Abflussnute vorgesehen, über welche das mit Verunreinigungen versetzte Kühlmittel abfließt, bevor es überhaupt in das Labyrinth gelangen kann.

Von Vorteil ist dabei, wenn der zweite Schenkel den Ringansatz bis zu der Abflussnut abdeckt, so dass das mit Verunreinigungen versetzte Kühlmittel unmittelbar in die Abflussnut gelangt, ohne vorher vor dem Labyrintheingang anzustehen. Weiterhin ist von Vorteil, wenn der Abstand zwischen Ringansatz und dem zweiten Schenkel nur ca. 0,5 bis 1,5 mm beträgt. Dieser Abstand gewährleistet, dass der von Walzen aufzubringende Offset noch bewerkstelligt werden kann, dass jedoch das Labyrinth möglichst schmal gehalten wird und damit dem ggf. verschmutzten Kühlmittel nur einen möglichst eingeengten schmalen Weg zur Verfügung stellt.

Weist der mit der Walze rotierende zweite Schenkel an seinem Ende mindestens eine Abscheiderkante auf, so ist noch besser gewährleistet, dass das mit Verunreinigungen versetzte Kühlmittel vom Schenkel abspritzt und nicht in das Labyrinth sondern in die Abflussnut gelangen kann.

Es hat sich bewährt, dass das L-förmige Ringprofil oberflächenbehandelt z.B. verfestigt und/oder beschichtet ist. Durch ein Rollieren wird einerseits die Oberfläche bereichsweise gehärtet und andererseits werden der Oberfläche die eventuell bei der Herstellung entstandenen Spitzen genommen, so dass der Dichtungslippe eine möglichst glatte Oberfläche entgegensteht. Durch die Härtung der Oberfläche wird erreicht, dass das L-förmige Ringprofil eine große Lebensdauer hat.

Wird das L-förmige Ringprofil zusätzlich noch plasmanitriert, so erhält es eine noch größere Härte. Durch ein gezieltes Oxidieren wird erreicht, dass im Oberflächenbereich des L-förmigen Ringprofils alle freien Bindungen der Moleküle mit O-Atomen besetzt werden, so dass ein späteres Oxidieren des L-förmigen Ringprofils nicht mehr möglich ist.

Ist dem L-förmigen Ringprofil oder aber der Stirnseite der Walze ein Schmiermitteldepot zugeordnet, das über geeignete Kanäle stets geringe Mengen an Schmiermittel an die Stelle zwischen der Dichtungslippe der Ringdichtung und dem ersten Schenkel des L-förmigen Profils abzugeben vermag, wird gewährleistet, dass sowohl die Dichtlippe als auch das L-förmige Ringprofil eine noch größere Lebensdauer erhält.

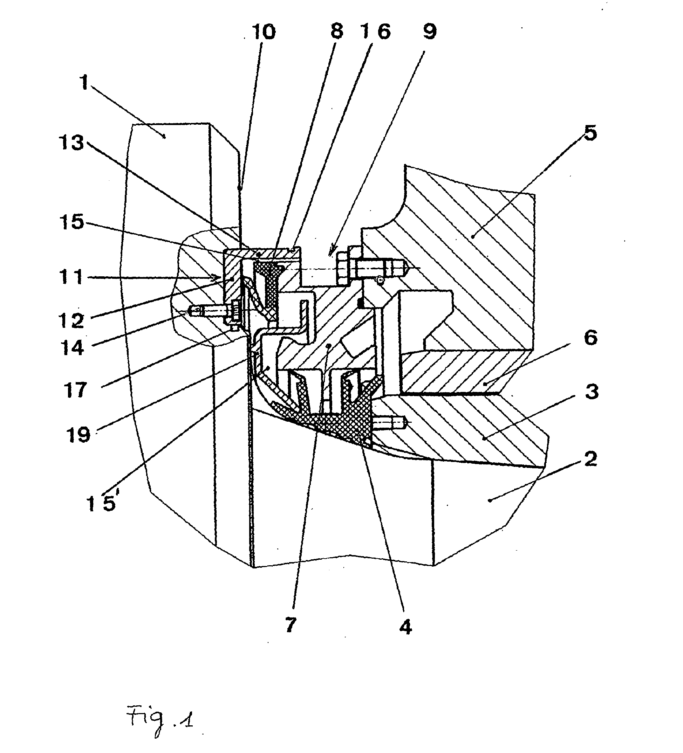

Die Erfindung wird anhand einer Zeichnung näher erläutert. Dabei zeigt die Zeichnung eine Walze 1 mit einem Walzenzapfen 2, auf dem eine Zapfenbuchse 3 drehfest aufgebracht ist. Die Walzenbuchse 3 hält eine ringförmige Zapfendichtung 4 in Position. Das feststehende Lagergehäuse 5 trägt die Lagerbuchse 6. Am Lagergehäuse 5 ist ein Ringansatz 7 fest angeordnet, der wiederum eine Ringdichtung 8 drehfest aufnimmt. Der Ringansatz 7 weist eine Abflussnut 9 auf, in der mit Verunreinigungen versetztes Kühlmittel gesammelt und in den unteren Bereich der ringförmigen Abflussnut fließen kann.

An der Stirnseite 10 der Walze 1 ist ein im Querschnitt L-förmiges Ringprofil 11 mit seinem ersten Schenkel 12 und dem zweiten Schenkel 13 angeordnet. Dabei ist der erste Schenkel 12 über Schrauben 14 fest mit der Stirnseite 10 verbunden. Der zweite Schenkel 13 steht mit geringem Abstand über der Ringdichtung 8 und einem Teil des Ringansatzes 7, so dass das von der Walze 1 kommende; mit Verunreinigungen versetzte Kühlmittel nicht zur Ringdichtung 8 hin gelangen kann, sondern in den Abflussnut 9 geführt wird.

Damit das mit Verunreinigungen versetzte Kühlmittel nicht um den zweiten Schenkel 13 in das hier gebildete Labyrinth 15 gelangen kann, weist der zweite Schenkel 13 eine Abscheiderkante 16 auf, die bei sich drehendem zweiten Schenkel 13 ein noch sichereres Abscheiden des mit Verunreinigungen versetzten Kühlmittels gewährleistet.

Im Bereich des ersten Schenkels 12 und der Stirnseite 10 ist ein Schmiermitteldepot 17 vorgesehen, aus dem Schmiermittel zur Anlagefläche der Dichtungslippe 18 auf dem ersten Schenkel 12 gelangen kann, um hier eine entsprechende Schmierwirkung, und damit eine erhöhte Lebensdauer hervorzurufen.

Zwischen der Ringdichtung 8 und der Zapfendichtung 4 sorgt ein weiteres ringförmiges Profil 19 dafür, dass ein möglichst verwindungsreiches Labyrinth 15' entsteht.

### Bezugszeichenübersicht

- 1.: Walze
- 2.: Walzenzapfen
- 3.: Zapfenbuchse
- 4.: Zapfendichtung
- 5.: Lagergehäuse
- 6.: Lagerbuchse
- 7.: Ringansatz
- 8.: Ringdichtung
- 9.: Abflussnut
- 10.: Stirnseite
- 11.: L-förmiges Profil
- 12.: erster Schenkel
- 13.: zweiter Schenkel
- 14.: Schraube
- 15.: Labyrinth
- 16.: Abscheiderkante
- 17.: Schmiermitteldepot
- 18.: Dichtungslippe
- 19.: ringförmiges Profil

## Patentansprüche

1. Walzenlagerdichtungsvorrichtung mit einer Zapfendichtung (4) der walzenballenseitig eine Ringdichtung (8) vorgeordnet ist, die fest mit einem Ringansatz (7) des Lagergehäuses (5) verbunden ist und deren Dichtungslippe (18) auf der Stirnseite (10) der Walze (1) mit Dichtungskontakt aufliegt, wobei ein im Querschnitt L-förmiges Ringprofil (11) mit seinem ersten Schenkel (12) mit der Stirnseite (14) der Walze (1) fest verbunden ist, die Dichtungslippe (18) auf Bereichen des ersten Schenkels (12) aufliegt, und wobei mindestens der mit der Dichtungslippe (18) in Kontakt stehende Bereich des ersten Schenkels (12) verfestigt, z.B. rolliert und/oder bereichsweise plasmanitriert und/oder gezielt oxidiert ist, **dadurch gekennzeichnet, dass** der zweite Schenkel (13) des L-förmigen Ringprofils (11) die Ringdichtung (8) und Bereiche des Ringansatzes (7) mit geringem Abstand umschließt, und zum Walzenballen hin abdichtet und, dass der Ringansatz (7) außenseitig und nach außen offen eine Abflussnut (9) aufweist.

2. Walzenlagerdichtungsvorrichtung nach Anspruch 1,
**dadurch gekennzeichnet,**
**dass** der zweite Schenkel (13) den Ringansatz (7) bis in den Bereich der Abflussnut (9) abdeckt.

3. Walzenlagerdichtungsvorrichtung nach Anspruch 1 oder 2,
**dadurch gekennzeichnet,**
**dass** der Abstand zwischen Ringansatz (7) und dem zweiten Schenkel (13) ca. 0,5 bis 1,5 mm beträgt.

4. Walzenlagerdichtungsvorrichtung nach einem der Ansprüche 1 bis 3,
**dadurch gekennzeichnet,**
**dass** der zweite Schenkel (13) im Bereich seines freien Endes mindestens eine Abscheiderkante (16) aufweist.

5. Walzenlagerdichtungsvorrichtung nach mindestens einem der Ansprüche 1 bis 4,
**dadurch gekennzeichnet,**
**dass** der Stirnseite (10) der Walze (1) und/oder dem ersten Schenkel (12) mindestens ein Schmiermitteldepot (17) zugeordnet ist und dass zwischen dem Schmiermitteldepot (17) und dem Kontaktbereich der Dichtungslippe (18) mit dem ersten Schenkel (12) eine Verbindung besteht.

## Claims

1. Roll bearing sealing device with a pin seal (4), upstream of which on the roll circumference side is arranged an annular seal (8), which is fixedly connected with an annular projection (7) of the bearing housing (5) and the sealing lip (18) of which rests - with sealing contact - on the end face (10) of the roll (1), wherein an annular profile member (11) of L-shaped cross-section is fixedly connected by its first limb (12) with the end face (14) of the roll (1), which sealing lip (18) rests on regions of the first limb (12), and wherein at least the region of the first limb (12) standing in contact with the sealing lip (18) is hardened, for example roller-burnished and/or plasma-nitrided in regions and/or selectively oxidised, **characterised in that** the second limb (13) of the L-shaped annular profile member (11) surrounds the annular seal (8) and regions of the annular projection (7) at a small spacing and seals off with respect to the roll circumference and that the annular projection (7) has an outwardly open run-off groove (9) at the outer side.

2. Roll bearing sealing device according to claim 1, **characterised in that** the second limb (13) covers the annular projection (7) as far as the region of the outflow groove (9).

3. Roll bearing sealing device according to claim 1 or 2, **characterised in that** the spacing between annular projection (7) and the second limb (13) is approximately 0.5 to 1.5 millimetres.

4. Roll bearing sealing device according to any one of claims 1 to 3, **characterised in that** the second limb (13) has at least one separator edge (16) in the region of its free end.

5. Roll bearing sealing device according to at least one of claim 1 to 4, **characterised in that** at least one lubricant reserve (17) is associated with the end face (10) of the roll (1) and/or the first limb (12) and that a connection between the lubricant reserve (17) and the region of contact of the sealing lip (18) with the first limb (12) is present.

## Revendications

1. Dispositif d'étanchéité d'un palier de cylindre avec un joint (4) de tourillon qui est précédé, côté table de cylindre, d'un joint annulaire (8), qui est relié de manière fixe avec une butée annulaire (7) du bâti (5) du palier et dont la lèvre d'étanchéité (18) se place sur la face frontale (10) du cylindre (1) avec un contact d'étanchéité, un profilé annulaire (11) avec une section en forme de L étant relié de manière fixe avec sa première branche (12) avec la face frontale (14) du cylindre (1), la lèvre d'étanchéité (18) se plaçant sur des zones de la première branche (12) et au moins la zone en contact avec la lèvre d'étanchéité (18) de la première branche (12) étant renforcée, par exemple par galetage et/ou partiellement nitrée au plasma et/ou oxydée de manière ciblée,
**caractérisé**
**en ce que** la deuxième branche (13) du profilé annulaire (11) en forme de L entoure le joint annulaire (8) et des zones de la butée annulaire (7) à une faible distance et est étanche vers la table du cylindre et en ce que la butée annulaire (7) présente, côté extérieur et en étant ouverte vers l'extérieur une rainure d'évacuation (9).

2. Dispositif d'étanchéité d'un palier de cylindre selon la revendication 1,
**caractérisé**
**en ce que** la deuxième branche (13) recouvre de la butée annulaire (7) jusque dans la zone de la rainure d'évacuation (9).

3. Dispositif d'étanchéité d'un palier de cylindre selon la revendication 1 ou 2, **caractérisé**
**en ce que** la distance entre la butée annulaire (7) et la deuxième branche (13) est d'environ 0,5 à 1,5 mm.

4. Dispositif d'étanchéité d'un palier de cylindre selon l'une quelconque des revendications 1 à 3, **caractérisé**
**en ce que** la deuxième branche (13) présente, au niveau de son extrémité libre, au moins un bord séparateur (16).

5. Dispositif d'étanchéité d'un palier de cylindre selon au moins l'une quelconque des revendications 1 à 4, **caractérisé**
**en ce que** la face frontale (10) du cylindre (1) et/ou la première branche (12) est associée à au moins un dépôt de lubrifiant (17) et en ce qu'il existe une liaison entre le dépôt de lubrifiant (17) et la zone de contact de la lèvre d'étanchéité (18) avec la première branche (12).
